# EUROPEAN PATENT APPLICATION

(11) **EP 4 607 867 A1**
(43) Date of publication of application: **27.08.2025**
(21) Application number: 22962493.7
(22) Date of filing: 21.10.2022
(51) Int. Cl.: H04L 27/00

(54) **TRANSMISSION CONFIGURATION INDICATOR STATE DETERMINATION METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/126843
(87) International publication number: WO 2024/082312

(57) **Abstract**

The present disclosure relates to the technical field of communications, and relates to a transmission configuration indicator (TCI) state determination method and apparatus, and a storage medium, used for enabling a terminal and a network device to use a consistent TCI state to perform transmission, so as to improve the signal quality of TCI state-based M-TRP transmission. The method comprises: receiving first information sent by a network device, and determining, on the basis of the first information, at least two search space sets having a link relationship; and receiving second information sent by the network device, and determining, on the basis of the second information, the mapping relationship between the at least two search space sets and TCI states.

## Description

### FIELD

The present invention relates to the field of communication technology, and more particularly to a method and apparatus for determining a transmission configuration indicator (TCI) state and a storage medium.

### BACKGROUND

In the new radio (NR) technology, for example, in a case where a communication frequency band is in a frequency range 2, a high-frequency channel may attenuate quickly, so beam-based transmission and reception are required to ensure the coverage range.

In the related art, in order to reduce signaling overhead, utilization of a unified transmission configuration indicator (unified TCI) state is introduced. The unified TCI state may be indicated separately for uplink and downlink, or indicated jointly for uplink and downlink. That is, in a case where a network device indicates a TCI state for downlink, the TCI state may be applied to physical downlink shared channels (PDSCHs) and/or their corresponding demodulation reference signals (DMRSs), at least a part of physical downlink control channels (PDCCHs) and/or their corresponding DMRSs, and at least a part of channel state information reference signals (CSI-RSs) of a terminal. In a case where the network device indicates a TCI state for uplink, the TCI state may be applied to physical uplink shared channels (PUSCHs) and/or their corresponding DMRSs, and at least a part of physical uplink control channels (PUCCHs) and/or their corresponding DMRSs, and at least a part of sounding reference signals (SRSs) of the terminal. In a case where the network device indicates a joint TCI state, the joint TCI state may be applied to both uplink and downlink channels and/or reference signals.

The related technology is only applicable to a single transmission reception point (S-TRP).

### SUMMARY

In order to overcome problems existing in the related art, the present invention provides a method and apparatus for determining a transmission configuration indicator (TCI) state, and a storage medium.

According to a first aspect of embodiments of the present invention, there is provided a method for determining a transmission configuration indicator state, which is performed by a terminal, and includes: receiving first information sent by a network device, and determining at least two search space sets having a link relationship according to the first information; and receiving second information sent by the network device, and determining a mapping relationship between the at least two search space sets and transmission configuration indicator (TCI) states according to the second information.

In an embodiment, the method further includes: receiving third information sent by the network device, where the third information is configured to indicate at least one TCI state; determining whether to monitor physical downlink control channel (PDCCH) candidate resources of the at least two search space sets according to the at least one TCI state; and/or determining to monitor a PDCCH candidate resource of at least one first search space set in the at least two search space sets according to the at least one TCI state.

In an embodiment, the third information indicates one TCI state; and determining whether to monitor the physical downlink control channel (PDCCH) candidate resources of the at least two search space sets according to the at least one TCI state includes: in response to the third information indicating one TCI state, determining to stop monitoring the PDCCH candidate resources of the at least two search space sets.

In an embodiment, determining to monitor the PDCCH candidate resource of the at least one first search space set in the at least two search space sets according to the at least one TCI state includes: monitoring the PDCCH candidate resource of the at least one first search space set in the at least two search space sets according to the mapping relationship and the at least one TCI state indicated by the third information.

In an embodiment, the third information indicates a plurality of TCI states; and monitoring the PDCCH candidate resource of the at least one first search space set in the at least two search space sets according to the mapping relationship and the at least one TCI state indicated by the third information includes: monitoring the PDCCH candidate resource of each of the at least two search space sets according to the mapping relationship and the plurality of TCI states.

In an embodiment, the third information indicates one TCI state; and monitoring the PDCCH candidate resources of the at least one first search space set in the at least two search space sets according to the mapping relationship and the at least one TCI state indicated by the third information includes: monitoring a PDCCH candidate resource of such a first search space set in the at least two search space sets that corresponds to the one TCI state according to the mapping relationship and the one TCI state.

In an embodiment, the third information indicates one TCI state; and monitoring the PDCCH candidate resource of the at least one first search space set in the at least two search space sets according to the mapping relationship and the at least one TCI state indicated by the third information includes: monitoring the PDCCH candidate resources of the at least two search space sets according to the one TCI state.

In an embodiment, the TCI state indicated by the third information includes a first TCI state, and a search space set corresponding to the first TCI state is the same as a search space set corresponding to a second TCI state among the second TCI state and a third TCI state that are currently used by the terminal; and monitoring the PDCCH candidate resource of the at least one first search space set in the at least two search space sets according to the mapping relationship and the at least one TCI state indicated by the third information includes: determining a first search space set corresponding to the first TCI state and a second search space set corresponding to the third TCI state according to the mapping relationship; and monitoring a PDCCH candidate resource of the first search space set according to the first TCI state and monitoring a PDCCH candidate resource of the second search space set according to the third TCI state.

In an embodiment, the second information indicates the mapping relationship between the at least two search space sets and the transmission configuration indicator (TCI) states by at least one of: indicating one or more TCI states corresponding to each of the at least two search space sets; indicating one or more TCI states corresponding to a control resource set associated with each of the at least two search space sets; or indicating one or more TCI states corresponding to a control resource set group or control resource set pool index to which a control resource set associated with each of the at least two search space sets belongs.

In an embodiment, the second information includes at least one of: a radio resource control (RRC) signaling; a medium access control-control element (MAC-CE); or downlink control information (DCI).

In an embodiment, the third information includes at least one of: an MAC-CE; or DCI.

In an embodiment, the MAC-CE is configured to indicate at least one TCI state, and the at least one TCI state corresponds to one code point in a TCI state indication field carried in DCI; or the MAC-CE is configured to indicate at least one TCI state corresponding to each of a plurality of code points in a TCI state indication field carried in DCI, and the TCI state indication field carried in the DCI is configured to indicate one of the plurality of code points.

In an embodiment, the at least one TCI state indicated by the third information is configured to determine a quasi co-location (QCI) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or the at least one TCI state indicated by the third information is configured to determine a QCI assumption of at least one of a physical uplink control channel (PUCCH), a physical uplink shared channel (PUSCH), a DMRS of the PUCCH and/or the PUSCH, or a sounding reference signal (SRS).

In an embodiment, the TCI state includes an uplink-downlink joint TCI state and/or a downlink TCI state.

According to a second aspect of embodiments of the present invention, there is provided a method for determining a transmission configuration indicator state, which is performed by a network device, and includes: sending first information to a terminal, where the first information is configured to instruct the terminal to determine at least two search space sets having a link relationship; and sending second information to the terminal, where the second information is configured to instruct the terminal to determine a mapping relationship between the at least two search space sets and transmission configuration indicator (TCI) states.

In an embodiment, the method further includes: sending third information to the terminal, the third information is configured to indicate at least one TCI state, the at least one TCI state is configured to instruct the terminal whether to monitor physical downlink control channel (PDCCH) candidate resources of the at least two search space sets; and/or the at least one TCI state is configured to instruct the terminal to monitor a physical downlink control channel (PDCCH) candidate resource of at least one first search space set in the at least two search space sets.

In an embodiment, the third information indicates one TCI state, and the one TCI state is configured to instruct the terminal to stop monitoring the PDCCH candidate resources of the at least two search space sets.

In an embodiment, the third information indicates a plurality of TCI states, and the plurality of TCI states are configured to instruct the terminal to monitor the PDCCH candidate resource of each of the at least two search space sets.

In an embodiment, the third information indicates one TCI state, and the one TCI state is configured to instruct the terminal to monitor a PDCCH candidate resource of such a first search space set in the at least two search space sets that corresponds to the one TCI state.

In an embodiment, the third information indicates one TCI state, and the one TCI state is configured to instruct the terminal to monitor the PDCCH candidate resources of the at least two search space sets.

In an embodiment, the TCI state indicated by the third information includes a first TCI state, and a search space set corresponding to the first TCI state is the same as a search space set corresponding to a second TCI state among the second TCI state and a third TCI state that are currently used by the terminal; and the first TCI state is configured for determining to monitor, by the terminal, a PDCCH candidate resource of a first search space set corresponding to the first TCI state.

In an embodiment, the second information indicates the mapping relationship between the at least two search space sets and the transmission configuration indicator (TCI) states by at least one of: indicating one or more TCI states corresponding to each of the at least two search space sets; indicating one or more TCI states corresponding to a control resource set associated with each of the at least two search space sets; or indicating one or more TCI states corresponding to a control resource set group or control resource set pool index to which a control resource set associated with each of the at least two search space sets belongs.

In an embodiment, the second information includes at least one of: a radio resource control (RRC) signaling; a medium access control-control element (MAC-CE); or downlink control information (DCI).

In an embodiment, the third information includes at least one of: an MAC-CE; or DCI.

In an embodiment, the MAC-CE is configured to indicate at least one TCI state, and the at least one TCI state corresponds to one code point in a TCI state indication field carried in DCI; or the MAC-CE is configured to indicate at least one TCI state corresponding to each of a plurality of code points in a TCI state indication field carried in DCI, and the TCI state indication field carried in the DCI is configured to indicate one of the plurality of code points.

In an embodiment, the at least one TCI state indicated by the third information is configured to determine a quasi co-location (QCI) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or the at least one TCI state indicated by the third information is configured to determine a QCI assumption of at least one of a physical uplink control channel (PUCCH), a physical uplink shared channel (PUSCH), a DMRS of the PUCCH and/or the PUSCH, or a sounding reference signal (SRS).

In an embodiment, the TCI state includes an uplink-downlink joint TCI state and/or a downlink TCI state.

According to a third aspect of embodiments of the present invention, there is provided an apparatus for determining a transmission configuration indicator state, which is applied to a terminal, and includes: a receiving module configured to: receive first information sent by a network device, and determine at least two search space sets having a link relationship according to the first information; and the receiving module is further configured to: receive second information sent by the network device, and determine a mapping relationship between the at least two search space sets and transmission configuration indicator (TCI) states according to the second information.

In an embodiment, the receiving module is further configured to receive third information sent by the network device, where the third information is configured to indicate at least one TCI state; and a processing module is configured to: determine whether to monitor physical downlink control channel (PDCCH) candidate resources of the at least two search space sets according to the at least one TCI state; and/or determine to monitor a PDCCH candidate resource of at least one first search space set in the at least two search space sets according to the at least one TCI state.

In an embodiment, the third information indicates one TCI state; and the processing module is configured to: in response to the third information indicating one TCI state, determine to stop monitoring the PDCCH candidate resources of the at least two search space sets.

In an embodiment, the processing module is configured to: monitor the PDCCH candidate resource of the at least one first search space set in the at least two search space sets according to the mapping relationship and the at least one TCI state indicated by the third information.

In an embodiment, the third information indicates a plurality of TCI states; and the processing module is configured to: monitor the PDCCH candidate resource of each of the at least two search space sets according to the mapping relationship and the plurality of TCI states.

In an embodiment, the third information indicates one TCI state; and the processing module is configured to: monitor a PDCCH candidate resource of such a first search space set in the at least two search space sets that corresponds to the one TCI state according to the mapping relationship and the one TCI state.

In an embodiment, the third information indicates one TCI state; and the processing module is configured to: monitor the PDCCH candidate resources of the at least two search space sets according to the one TCI state.

In an embodiment, the TCI state indicated by the third information includes a first TCI state, and a search space set corresponding to the first TCI state is the same as a search space set corresponding to a second TCI state among the second TCI state and a third TCI state that are currently used by the terminal; and the processing module is configured to: determine a first search space set corresponding to the first TCI state and a second search space set corresponding to the third TCI state according to the mapping relationship; and monitor a PDCCH candidate resource of the first search space set according to the first TCI state and monitor a PDCCH candidate resource of the second search space set according to the third TCI state.

In an embodiment, the second information indicates the mapping relationship between the at least two search space sets and the transmission configuration indicator (TCI) states by at least one of: indicating one or more TCI states corresponding to each of the at least two search space sets; indicating one or more TCI states corresponding to a control resource set associated with each of the at least two search space sets; or indicating one or more TCI states corresponding to a control resource set group or control resource set pool index to which a control resource set associated with each of the at least two search space sets belongs.

In an embodiment, the second information includes at least one of: a radio resource control (RRC) signaling; a medium access control-control element (MAC-CE); or downlink control information (DCI).

In an embodiment, the third information includes at least one of: an MAC-CE; or DCI.

In an embodiment, the MAC-CE is configured to indicate at least one TCI state, and the at least one TCI state corresponds to one code point in a TCI state indication field carried in DCI; or the MAC-CE is configured to indicate at least one TCI state corresponding to each of a plurality of code points in a TCI state indication field carried in DCI, and the TCI state indication field carried in the DCI is configured to indicate one of the plurality of code points.

In an embodiment, the at least one TCI state indicated by the third information is configured to determine a quasi co-location (QCI) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or the at least one TCI state indicated by the third information is configured to determine a QCI assumption of at least one of a physical uplink control channel (PUCCH), a physical uplink shared channel (PUSCH), a DMRS of the PUCCH and/or the PUSCH, or a sounding reference signal (SRS).

In an embodiment, the TCI state includes an uplink-downlink joint TCI state and/or a downlink TCI state.

According to a fourth aspect of embodiments of the present invention, there is provided an apparatus for determining a transmission configuration indicator state, which is applied to a network device, and includes: a sending module configured to send first information to a terminal, where the first information is configured for the terminal to determine at least two search space sets having a link relationship; and the sending module is further configured to: send second information to the terminal, where the second information is configured for the terminal to determine a mapping relationship between the at least two search space sets and transmission configuration indicator (TCI) states.

In an embodiment, the sending module is configured to send third information to the terminal, the third information is configured to indicate at least one TCI state; the at least one TCI state is configured to instruct the terminal whether to monitor physical downlink control channel (PDCCH) candidate resources of the at least two search space sets; and/or the at least one TCI state is configured to instruct the terminal to monitor a physical downlink control channel (PDCCH) candidate resource of at least one first search space set in the at least two search space sets.

In an embodiment, the third information indicates one TCI state, and the one TCI state is configured to instruct the terminal to stop monitoring the PDCCH candidate resources of the at least two search space sets.

In an embodiment, the third information indicates a plurality of TCI states, and the plurality of TCI states are configured to instruct the terminal to monitor the PDCCH candidate resource of each of the at least two search space sets.

In an embodiment, the third information indicates one TCI state, and the one TCI state is configured to instruct the terminal to monitor a PDCCH candidate resource of such a first search space set in the at least two search space sets that corresponds to the one TCI state.

In an embodiment, the third information indicates one TCI state, and the one TCI state is configured to instruct the terminal to monitor the PDCCH candidate resources of the at least two search space sets.

In an embodiment, the TCI state indicated by the third information includes a first TCI state, and a search space set corresponding to the first TCI state is the same as a search space set corresponding to a second TCI state among the second TCI state and a third TCI state that are currently used by the terminal; and the first TCI state is configured for determining to monitor, by the terminal, a PDCCH candidate resource of a first search space set corresponding to the first TCI state.

In an embodiment, the second information indicates the mapping relationship between the at least two search space sets and the transmission configuration indicator (TCI) states by at least one of: indicating one or more TCI states corresponding to each of the at least two search space sets; indicating one or more TCI states corresponding to a control resource set associated with each of the at least two search space sets; or indicating one or more TCI states corresponding to a control resource set group or control resource set pool index to which a control resource set associated with each of the at least two search space sets belongs.

In an embodiment, the second information includes at least one of: a radio resource control (RRC) signaling; a medium access control-control element (MAC-CE); or downlink control information (DCI).

In an embodiment, the third information includes at least one of: an MAC-CE; or DCI.

In an embodiment, the MAC-CE is configured to indicate at least one TCI state, and the at least one TCI state corresponds to one code point in a TCI state indication field carried in DCI; or the MAC-CE is configured to indicate at least one TCI state corresponding to each of a plurality of code points in a TCI state indication field carried in DCI, and the TCI state indication field carried in the DCI is configured to indicate one of the plurality of code points.

In an embodiment, the at least one TCI state indicated by the third information is configured to determine a quasi co-location (QCI) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or the at least one TCI state indicated by the third information is configured to determine a QCI assumption of at least one of a physical uplink control channel (PUCCH), a physical uplink shared channel (PUSCH), a DMRS of the PUCCH and/or the PUSCH, or a sounding reference signal (SRS).

In an embodiment, the TCI state includes an uplink-downlink joint TCI state and/or a downlink TCI state.

According to a fifth aspect of embodiments of the present invention, there is provided an apparatus for determining a transmission configuration indicator state, which includes: a processor; and a memory for storing instructions executable by the processor; and the processor is configured to perform the method as described in the first aspect and any of the embodiments thereof.

According to a sixth aspect of embodiments of the present invention, there is provided an apparatus for determining a transmission configuration indicator state, which includes: a processor; and a memory for storing instructions executable by the processor; and the processor is configured to perform the method as described in the second aspect and any of the embodiments thereof.

According to a seventh aspect of embodiments of the present invention, there is provided a storage medium having stored therein instructions that, when executed by a processor of a terminal, cause the terminal to perform the method as described in the first aspect and any of the embodiments thereof.

According to an eighth aspect of embodiments of the present invention, there is provided a storage medium having stored therein instructions that, when executed by a processor of a network device, cause the network device to perform the method as described in the second aspect and any of the embodiments thereof.

According to a ninth aspect of embodiments of the present invention, there is provided a communication system, which includes a terminal and a network device, the first terminal is configured to perform the method as described in the first aspect and any of the embodiments thereof; and the second terminal is configured to perform the method as described in the second aspect and any of the embodiments thereof.

The technical solutions according to embodiments of the present invention may include the following advantageous effects. In the case where the terminal is configured with at least two search space sets having a link relationship, a TCI state corresponding to each of the at least two search space sets is determined, so that a consistent TCI state is used by the terminal and the network device for transmission, thereby improving the signal quality of the M-TRP transmission based on the TCI state.

It is to be understood that both the foregoing general description and the following detailed description are illustrative and explanatory and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
FIG. 1 is a schematic diagram showing a wireless communication system according to an example embodiment.
FIG. 2 is a flow chart showing a method for determining a TCI state according to an example embodiment.
FIG. 3 is a flow chart showing a method for determining a TCI state according to an example embodiment.
FIG. 4 is a flow chart showing a method for determining a TCI state according to an example embodiment.
FIG. 5 is a flow chart showing a method for determining a TCI state according to an example embodiment.
FIG. 6 is a flow chart showing a method for determining a TCI state according to an example embodiment.
FIG. 7 is a flow chart showing a method for determining a TCI state according to an example embodiment.
FIG. 8 is a flow chart showing a method for determining a TCI state according to an example embodiment.
FIG. 9 is a flow chart showing a method for determining a TCI state according to an example embodiment.
FIG. 10 is a flow chart showing a method for determining a TCI state according to an example embodiment.
FIG. 11 is a flow chart showing a method for determining a TCI state according to an example embodiment.
FIG. 12 is a flow chart showing a method for determining a TCI state according to an example embodiment.
FIG. 13 is a block diagram showing an apparatus for determining a TCI state according to an example embodiment.
FIG. 14 is a block diagram showing an apparatus for determining a TCI state according to an example embodiment.
FIG. 15 is a block diagram showing an apparatus for determining a TCI state according to an example embodiment.
FIG. 16 is a block diagram showing an apparatus for determining a TCI state according to an example embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure.

In the new radio (NR) technology, for example, in a case where a communication frequency band is in a frequency range 2, a high-frequency channel may attenuate quickly, so beam-based transmission and reception are required to ensure the coverage range.

In the related art, in order to reduce signaling overhead, utilization of a unified transmission configuration indicator (unified TCI) state is introduced. The unified TCI state may be indicated separately for uplink and downlink, or indicated jointly for uplink and downlink. That is, in a case where a network device indicates a TCI state for downlink, the TCI state may be applied to physical downlink shared channels (PDSCHs) and/or their corresponding demodulation reference signals (DMRSs), at least a part of physical downlink control channels (PDCCHs) and/or their corresponding DMRSs, and at least a part of channel state information reference signals (CSI-RSs) of a terminal. In a case where the network device indicates a TCI state for uplink, the TCI state may be applied to physical uplink shared channels (PUSCHs) and/or their corresponding DMRSs, at least a part of physical uplink control channels (PUCCHs) and/or their corresponding DMRSs, and at least a part of sounding reference signals (SRSs) of the terminal. In a case where the network device indicates a joint TCI state, the joint TCI state may be applied to both uplink and downlink channels and/or reference signals.

The related technology is only applicable to a single transmission reception point (S-TRP).

The inventor has noticed that, in a scenario of multi-transmission reception point (M-TRP), for the case where two search space sets (SS sets) with a link relationship are configured, if a plurality of TCI states are indicated, the two search space sets each may employ one TCI state respectively. However, if only one TCI state is indicated, how to monitor a PDCCH candidate set in the two search space sets configured with the link relationship is a problem to be solved.

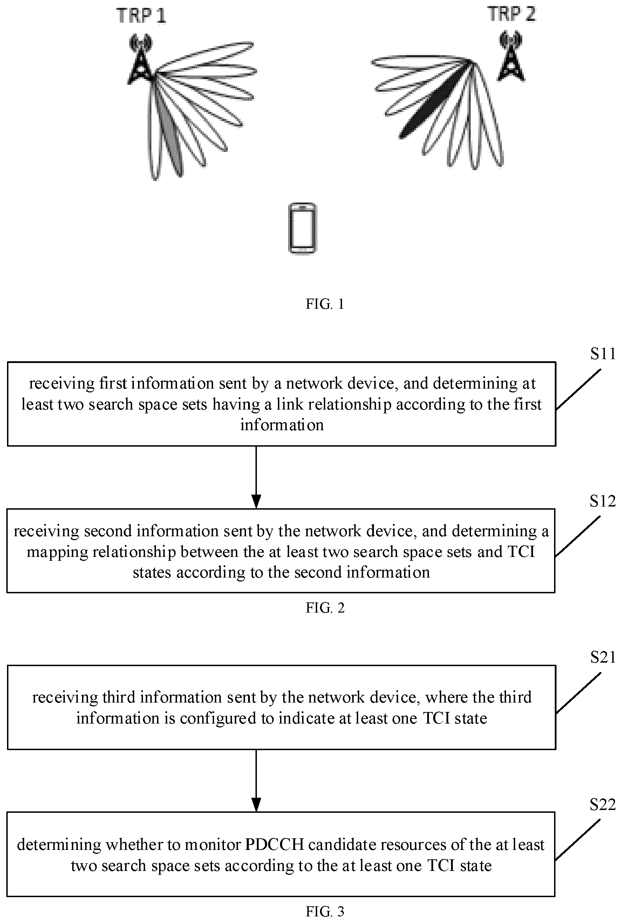

A method for determining a TCI state according to embodiments of the present invention may be applied to a wireless communication system illustrated in FIG. 1. As shown in FIG. 1, the wireless communication system includes a network device and a terminal. The terminal is connected to the network device via a radio resource, and performs data transmission.

It may be understood that the wireless communication system shown in FIG. 1 is only used as an example for illustration. The wireless communication system may also include other network devices, such as core network devices, wireless relay devices, and wireless backhaul devices, which are not shown in FIG 1. The number of network devices and the number of terminals included in the wireless communication system are not limited in embodiments of the present invention.

It may be further understood that the wireless communication system in the embodiments of the present invention is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. Depending on the capacity, rate, delay and other factors of different networks, the networks may be divided into a 2nd generation (2G) network, a 3G network, a 4G network, or a future evolution network, such as a 5G network that may also be referred to as a new radio (NR) network. For ease of description, a wireless communication network will be sometimes referred to as a network for short in the present invention.

Further, the network device involved in the present invention may also be referred to as a radio access network device. The radio access network device may be a base station, an evolved node B, a home base station, an access point (AP) in a wireless fidelity (WIFI) system, a wireless relay node, a wireless backhaul node, a transmission point (TP), a transmission and reception point (TRP), or the like, or may also be a gNB in an NR system, or may also be a component or a part of a device that constitutes a base station, etc. It is to be understood that the specific technology and specific device form adopted by the network device are not limited in the embodiments of the present invention. In the present invention, the network device may provide communication coverage for a particular geographic area and may communicate with the terminal located within the coverage area (cell). The network device may also be a vehicle-mounted device when it is used in a vehicle to everything (V2X) communication system.

Further, the terminal involved in the present invention, which may also be referred to as a terminal device, a user equipment (UE), a mobile station (MS), a mobile terminal (MT), etc., is a device that provides voice and/or data connectivity to a user. For example, the terminal may be a handheld device with a wireless connection function, a vehicle-mounted device, or the like. At present, some examples of the terminal are a smart phone, a customer premise equipment (CPE), a pocket personal computer (PPC), a palmtop computer, a personal digital assistant (PDA), a notebook computer, a tablet computer, a wearable device, a vehicle -mounted device, or the like. In addition, the terminal may also be a vehicle-mounted device when it is used in a vehicle to everything (V2X) communication system. It is to be understood that the specific technology and specific device form adopted by the terminal are not limited in the embodiments of the present invention.

In the new radio (NR) technology, for example, in a case where a communication frequency band is in a frequency range 2, a high-frequency channel may attenuate quickly, so beam-based transmission and reception are required to ensure the coverage range.

In the related art, beams used by the PDCCH and/or the DMRS of the PDCCH, the PDSCH and/or the DMRS of the PDSCH, the PUCCH and/or the DMRS of the PUCCH, the PUSCH and/or the DMRS of the PUSCH, and/or the reference signal are all independently indicated. The reference signal may include a CSI-RS, an SRS, a positioning reference signal (PRS), a tracking reference signal (TRS), and the like. For example, the CSI-RS may include a CSI-RS for channel state information measurement, a CSI-RS for beam measurement, or a CSI-RS for path loss estimation. The SRS may include an SRS for channel state information measurement based on a codebook or non-codebook, an SRS for beam measurement, or an SRS for positioning measurement.

In general, for the PDCCH and/or the DMRS of the PDCCH, and the PUCCH and/or the DMRS of the PUCCH, their respective beams are activated through an MAC CE, respectively, while for the PDSCH and/or the DMRS of the PDSCH, and the PUSCH and/or the DMRS of the PUSCH, their respective beams are indicated via DCI signaling, respectively.

The beam here may be indicated by a TCI state or spatialrelationinfo (a spatial relation). A TCI state corresponding to the PDCCH includes a TCI state corresponding to the PDCCH and/or the DMRS of the PDCCH, that is, the TCI state is used for reception of the PDCCH and/or the DMRS thereof. Similarly, a TCI state corresponding to the PDSCH includes a TCI state corresponding to the PDSCH and/or the DMRS of the PDSCH, that is, the TCI state is used for reception of the PDSCH and/or the DMRS thereof. A TCI state or spatialrelationinfo corresponding to the PUCCH includes a TCI state or spatialrelationinfo corresponding to the PUCCH and/or its DMRS, that is, the TCI state or spatialrelationinfo is used for transmission of the PUCCH and/or the DMRS thereof. A TCI state or spatialrelationinfo corresponding to the PUSCH includes a TCI state or spatialrelationinfo corresponding to the PUSCH and/or the DMRS thereof, that is, the TCI state or spatialrelationinfo is used for transmission of the PUSCH and/or the DMRS thereof.

Furthermore, in order to reduce signaling overhead, in another related technology, utilization of a unified transmission configuration indicator (unified TCI) state is introduced. The unified TCI state may be indicated separately for uplink and downlink, or indicated jointly for uplink and downlink. That is, in a case where a network device indicates a TCI state for downlink (DL TCI state), the TCI state may be applied to physical downlink shared channels (PDSCHs) and/or their DMRSs, at least a part of physical downlink control channels (PDCCHs) and/or their DMRSs, and at least a part of channel state information reference signals (CSI-RSs) of a terminal. In a case where the network device indicates a TCI state for uplink (UL TCI state), the TCI state may be applied to physical uplink shared channels (PUSCHs) and/or their DMRSs, at least a part of physical uplink control channels (PUCCHs) and/or their DMRSs, and at least a part of sounding reference signals (SRSs) of the terminal. In a case where the network device indicates a joint TCI state, the joint TCI state may be applied to both uplink and downlink channels and/or reference signals.

However, the related technology is only applicable to a single transmission reception point (S-TRP), without consideration of multi transmission reception point (M-TRP).

In a scenario of single DCI and M-TRP, one MAC CE or DCI signaling may indicate a plurality of TCI states. For the case where two search space sets with a link relationship are configured, if a plurality of TCI states are indicated, the two search space sets each may employ one TCI state respectively. However, if only one TCI state is indicated, how to monitor a PDCCH candidate set in the two search space sets configured with the link relationship is a problem to be solved.

In view of this, embodiments of the present invention provide a method for determining a TCI state. In the case where the terminal is configured with at least two search space sets having a link relationship, the TCI state corresponding to each of the at least two search space sets is determined, so that the terminal and the network device use a consistent TCI state, thereby improving the signal quality of M-TRP transmission based on the TCI state.

It is worth noting that, unless otherwise specified, the TCI state involved in embodiments of the present invention refers to a unified TCI state.

FIG. 2 is a flow chart showing a method for determining a TCI state according to an example embodiment, as shown in FIG. 2, the method for determining a TCI state is performed by a terminal and includes the following steps.

In step S11, first information sent by a network device is received, and at least two search space sets having a link relationship are determined according to the first information.

In step S12, second information sent by the network device is received, and a mapping relationship between the at least two search space sets and TCI states is determined according to the second information.

In embodiments of the present invention, in a case where the terminal is configured with at least two search space sets having a link relationship, a TCI state corresponding to each of the at least two search space sets is determined, so that a consistent TCI state is used by the terminal and the network device, thereby improving the signal quality of M-TRP transmission based on the TCI state.

In the method for determining a TCI state according to embodiments of the present invention, in the at least two search space sets having the link relationship, two PDCCH candidate resources with the same PDCCH candidate resource number are used to send the same DCI. That is, the two PDCCH candidate resources are used for repeated transmission of the PDCCH. The two search space sets correspond to the same period, the same slot offset, the same number of symbols occupied by the PDCCH, the same type of search space, and the same DCI format.

In an example implementation of the method for determining a TCI state according to embodiments of the present invention, a first search space set and a second search space set having a link relationship are determined according to the first information, and it is determined according to the second information that the first search space set corresponds to a first TCI state and that the second search space set corresponds to a second TCI state, so that a consistent TCI state is used by the terminal and the network device in transmission of the PDCCH, thereby improving the signal quality of the M-TRP transmission based on the TCI state.

FIG. 3 is a flow chart showing a method for determining a TCI state according to an example embodiment, as shown in FIG. 3, the method includes the following steps.

In step S21, third information sent by the network device is received, and the third information is configured to indicate at least one TCI state.

In step S22, whether to monitor PDCCH candidate resources of the at least two search space sets is determined according to the at least one TCI state. In embodiments of the present invention, in the case where the terminal is configured with the at least two search space sets having the link relationship, the TCI state corresponding to each of the at least two search space sets is determined, and whether to monitor the physical downlink control channel (PDCCH) candidate resources of the at least two search space sets is determined according to the TCI state indicated by the third information sent by the network device, so that it is consistent for the terminal and the network device on whether to monitor the search space set, thereby improving the signal quality of the M-TRP transmission based on the TCI state.

In embodiments of the present invention, in the case where the terminal is configured with the at least two search space sets having the link relationship, the TCI state corresponding to each of the at least two search space sets may be determined in any manner. For example, the TCI state corresponding to each of the at least two search space sets may be determined in the manner as described in steps S11-S12; and the mapping relationship between the at least two search space sets and the TCI states indicated by the second information indicates a mapping relationship with the TCI state indicated by the third information.

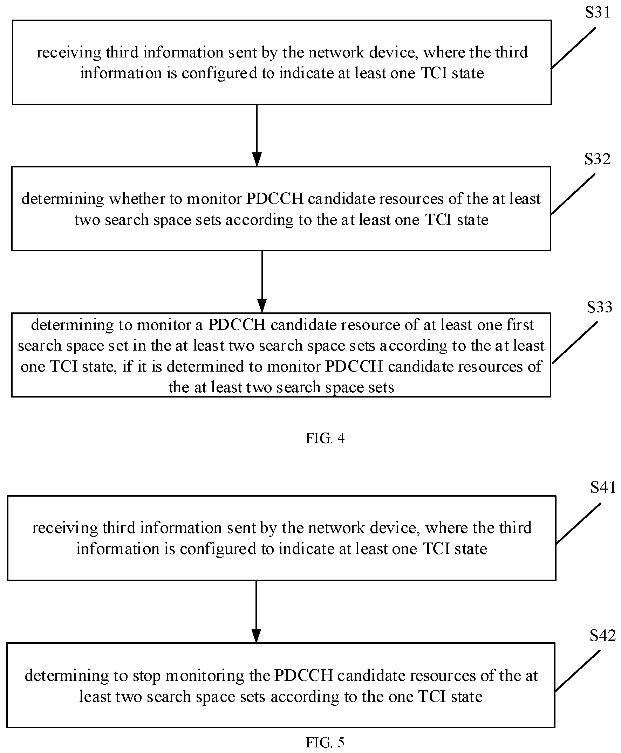

In embodiments of the present invention, in the step S22, whether to monitor the PDCCH candidate resources of the at least two search space sets may be determined according to the at least one TCI state. There are many ways to determine whether to monitor the PDCCH candidate resources of the at least two search space sets according to the at least one TCI state. In embodiments of the present invention, these ways are respectively described with reference to the following several schemes as shown in FIG. 4 to FIG. 10. It should be noted that in embodiments of the present invention, the several schemes as shown in FIG. 4 to FIG. 10 may be implemented separately, or each of them may be implemented in combination with other embodiments. In the method for determining a TCI state according to embodiments of the present invention, on the basis that it is determined to monitor the PDCCH candidate resources of the at least two search space sets according to the at least one TCI state indicated by the third information, it is further determined according to the at least one TCI state to monitor a PDCCH candidate resource of which search space set.

FIG. 4 is a flow chart showing a method for determining a TCI state according to an example embodiment, as shown in FIG. 4, the method includes the following steps.

In step S31, third information sent by the network device is received, and the third information is configured to indicate at least one TCI state.

In step S32, whether to monitor PDCCH candidate resources of the at least two search space sets is determined according to the at least one TCI state.

In step S33, if it is determined to monitor the PDCCH candidate resources of the at least two search space sets, it is determined to monitor a PDCCH candidate resource of at least one first search space set in the at least two search space sets according to the at least one TCI state.

In embodiments of the present invention, in the case where the terminal is configured with the at least two search space sets having the link relationship, the TCI state corresponding to each of the at least two search space sets is determined, whether to monitor the PDCCH candidate resources of the at least two search space sets is determined according to the TCI state indicated by the third information sent by the network device, and in the case where it is determined to monitor the PDCCH candidate resources of the at least two search space sets, it is further determined to monitor the PDCCH candidate resource of at least one first search space set in the at least two search space sets according to the at least one TCI state indicated by the third information. In this way, the terminal and the network device use the same TCI state for transmission, thereby improving the signal quality of the M-TRP transmission based on the TCI state.

In the following, how to determine whether to monitor the physical downlink control channel (PDCCH) candidate resources of the at least two search space sets according to the at least one TCI state indicated by the third information will be described.

In the method for determining a TCI state according to embodiments of the present invention, in response to the at least one TCI state indicated by the third information being one TCI state, it is determined to stop monitoring the PDCCH candidate resources of the at least two search space sets. As shown in FIG. 5, which is a flow chart showing a method for determining a TCI state according to an example embodiment, the method includes the following steps.

In step S41, third information sent by the network device is received, and the third information is configured to indicate one TCI state.

In step S42, it is determined to stop monitoring the PDCCH candidate resources of the at least two search space sets according to the one TCI state.

In embodiments of the present invention, in the case where the terminal is configured with the at least two search space sets having the link relationship, the TCI state corresponding to each of the at least two search space sets is determined, and it is determined to stop monitoring the physical downlink control channel (PDCCH) candidate resources of the at least two search space sets according to the TCI state indicated by the third information sent by the network device, so that waiving reception of DCI transmitted this time may be uniformly determined by the terminal and the network device, thereby improving the signal quality of the M-TRP transmission based on the TCI state.

In some embodiments, the terminal stops monitoring the PDCCH candidate resources of the at least two search space sets, and control channel elements (CCEs) corresponding to the PDCCH candidate resources of the at least two search space sets are not counted into the number of CCEs monitored by the terminal, or the number of CCEs corresponding to the PDCCH candidate resources of the at least two search space sets is counted as 0.

In some embodiments, the terminal stops monitoring the PDCCH candidate resources of the at least two search space sets, and the number of blind detections corresponding to the PDCCH candidate resources of the at least two search space sets is not counted into the number of blind detections performed by the terminal, or the number of blind detections corresponding to the PDCCH candidate resources of the at least two search space sets is 0.

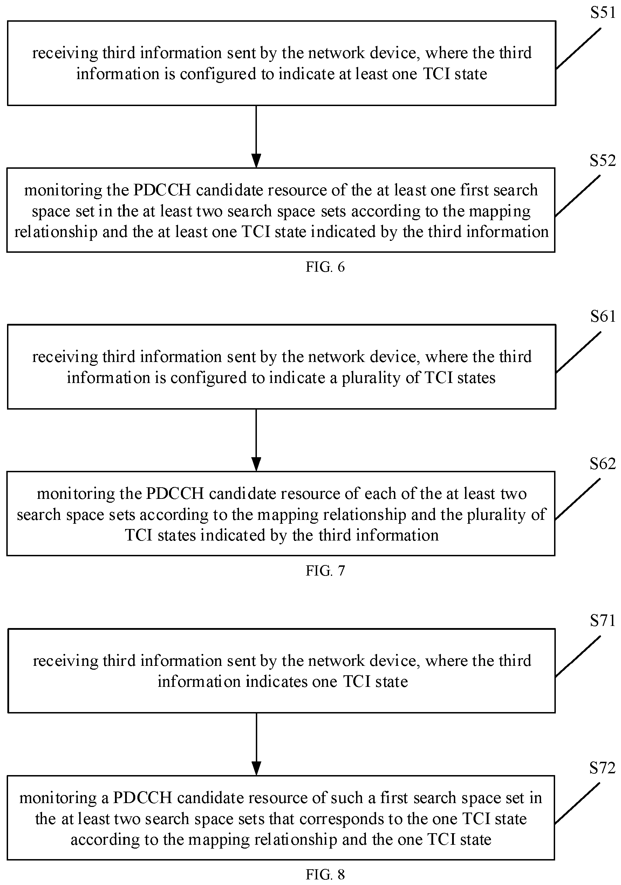

In the method for determining a TCI state provided according to embodiments of the present invention, in response to determining to monitor the PDCCH candidate resource of the at least two search space sets according to the at least one TCI state indicated by the third information, a PDCCH candidate resource of at least one first search space set in the at least two search space sets is monitored according to the mapping relationship and the at least one TCI state indicated by the third information. As shown in FIG. 6, which is a flow chart showing a method for determining a TCI state according to an example embodiment, the method includes the following steps.

In step S51, third information sent by the network device is received, and the third information is configured to indicate at least one TCI state.

In step S52, a PDCCH candidate resource of at least one first search space set in the at least two search space sets is monitored according to the mapping relationship and the at least one TCI state indicated by the third information.

In embodiments of the present invention, in the case where the terminal is configured with the at least two search space sets having the link relationship, the TCI state corresponding to each of the at least two search space sets is determined, and it is determined to monitor the PDCCH candidate resource of the at least one first search space set in the at least two search space sets according to the mapping relationship and the TCI state indicated by the third information sent by the network device, so that the terminal and the network device use the same TCI state for transmission, and the terminal and the network device can determine which search space set to monitor, thereby improving the signal quality of the M-TRP transmission based on the TCI state.

In the following, how to monitor the PDCCH candidate resource of the at least one first search space set in the at least two search space sets according to the mapping relationship and the at least one TCI state indicated by the third information will be described.

In the method for determining a TCI state according to embodiments of the present invention, in response to the third information indicating a plurality of TCI states, the PDCCH candidate resource of each of the at least two search space sets is monitored according to the mapping relationship and the plurality of TCI states. As shown in FIG. 7, which is a flow chart showing a method for determining a TCI state according to an example embodiment, the method includes the following steps.

In step S61, third information sent by the network device is received, and the third information is configured to indicate a plurality of TCI states.

In step S62, the PDCCH candidate resource of each of the at least two search space sets is monitored according to the mapping relationship and the plurality of TCI states indicated by the third information.

As an example, a first search space set and a second search space set that have a link relationship are determined according to the first information, and it is determined according to the second information that the first search space set corresponds to a first TCI state, and that the second search space set corresponds to a second TCI state. If the plurality of TCI states indicated by the third information include the first TCI state and the second TCI state, the PDCCH candidate resource of the first search space set is monitored according to the first TCI state, and the PDCCH candidate resource of the second search space set is monitored according to the second TCI state.

In some embodiments, the terminal monitors PDCCH candidate resources of two search space sets, and CCEs corresponding to the physical downlink control channel (PDCCH) candidate resources of the two search space sets are counted into the number of CCEs monitored by the terminal.

In some embodiments, the terminal monitors PDCCH candidate resources of two search space sets, and the number of blind detections corresponding to the PDCCH candidate resources of the two search space sets is counted into the number of blind detections performed by the terminal. The number of blind detections corresponding to the PDCCH candidate resources of the two search space sets may be 2 or 3.

It is worth noting that the mapping relationship involved in the step S62 refers to the mapping relationship between the at least two search space sets and TCI states. In addition to these embodiments of the present invention, the mapping relationship involved in any of the following embodiments refers to the mapping relationship between the at least two search space sets and TCI states.

In the method for determining a TCI state according to embodiments of the present invention, in response to the third information indicating one TCI state, a PDCCH candidate resource of such a first search space set in the at least two search space sets that corresponds to the one TCI state is monitored according to the mapping relationship and the one TCI state. As shown in FIG. 8, which is a flow chart showing a method for determining a TCI state according to an example embodiment, the method includes the following steps.

In step S71, third information sent by the network device is received, and the third information is configured to indicate one TCI state.

In step S72, a PDCCH candidate resource of such a first search space set in the at least two search space sets that corresponds to the one TCI state is monitored according to the mapping relationship and the one TCI state.

As an example, a first search space set and a second search space set that have a link relationship are determined according to the first information, and it is determined according to the second information that the first search space set corresponds to a first TCI state, and that the second search space set corresponds to a second TCI state. If the one TCI state indicated by the third information is the first TCI state, the PDCCH candidate resource of the first search space set is monitored according to the first TCI state, and monitoring the PDCCH candidate resource of the second search space set is stopped.

In some embodiments, the terminal monitors the PDCCH candidate resource of the first search space set, and CCEs corresponding to the PDCCH candidate resource of the first search space set need to be counted into the number of CCEs monitored by the terminal.

In some embodiments, the terminal stops monitoring the PDCCH candidate resource of the second search space set, and CCEs corresponding to the PDCCH candidate resource of the second search space set are not counted into the number of CCEs monitored by the terminal, or the number of CCEs corresponding to the PDCCH candidate resource of the second search space set is counted as 0.

In some embodiments, the terminal monitors the PDCCH candidate resource of the first search space set, and the number of blind detections corresponding to the PDCCH candidate resource of the first search space set needs to be counted into the number of CCEs monitored by the terminal. The number of blind detections corresponding to the PDCCH candidate resource of the first search space set may be 1, 2, or 3.

In some embodiments, the terminal stops monitoring the PDCCH candidate resource of the second search space set, and the number of blind detections corresponding to the PDCCH candidate resource of the second search space set is not counted into the number of blind detections performed by the terminal, or the number of blind detections corresponding to the PDCCH candidate resource of the second search space set is 0.

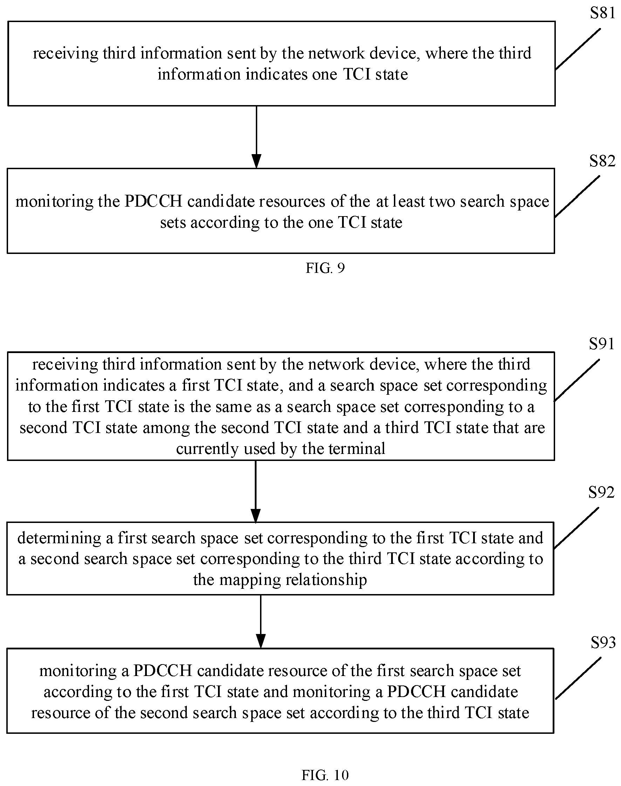

In the method for determining a TCI state according to embodiments of the present invention, in response to the third information indicating one TCI state, the PDCCH candidate resources of the at least two search space sets are monitored according to the one TCI state. As shown in FIG. 9, which is a flow chart showing a method for determining a TCI state according to an example embodiment, the method includes the following steps.

In step S81, third information sent by the network device is received, and the third information is configured to indicate one TCI state.

In step S82, the PDCCH candidate resources of the at least two search space sets are monitored according to the one TCI state.

As an example, a first search space set and a second search space set that have a link relationship are determined according to the first information, and it is determined according to the second information that the first search space set corresponds to a first TCI state, and that the second search space set corresponds to a second TCI state. If the one TCI state indicated by the third information is the first TCI state, both the PDCCH candidate resource of the first search space set and the PDCCH candidate resource of the second search space resource set are monitored according to the first TCI state.

In some embodiments, the terminal monitors the PDCCH candidate resources of the two search space sets, and CCEs corresponding to the physical downlink control channel (PDCCH) candidate resources of the two search space sets are counted into the number of CCEs monitored by the terminal.

In some embodiments, the terminal monitors the PDCCH candidate resources of the two search space sets, and the number of blind detections corresponding to the PDCCH candidate resources of the two search space sets is counted into the number of blind detections performed by the terminal. The number of blind detections corresponding to the PDCCH candidate resources of the two search space sets may be 2 or 3.

In the method for determining a TCI state according to embodiments of the present invention, in response to the TCI state indicated by the third information being a first TCI state, and a search space set corresponding to the first TCI state being the same as a search space set corresponding to a second TCI state among the second TCI state and a third TCI state that are currently used by the terminal, a first search space set corresponding to the first TCI state and a second search space set corresponding to the third TCI state are determined according to the mapping relationship, and a PDCCH candidate resource of the first search space set is monitored according to the first TCI state, and a PDCCH candidate resource associated with the second search space set is monitored according to the third TCI state. As shown in FIG. 10, which is a flow chart showing a method for determining a TCI state according to an example embodiment, the method includes the following steps.

In step S91, third information sent by the network device is received, the third information is configured to indicate a first TCI state, and a search space set corresponding to the first TCI state is the same as a search space set corresponding to a second TCI state among the second TCI state and a third TCI state that are currently used by the terminal

In step S92, a first search space set corresponding to the first TCI state and a second search space set corresponding to the third TCI state are determined according to the mapping relationship.

In step S93, a PDCCH candidate resource of the first search space set is monitored according to the first TCI state, and a PDCCH candidate resource of the second search space set is monitored according to the third TCI state.

In some embodiments, the terminal monitors the PDCCH candidate resources of the two search space sets, and CCEs corresponding to the physical downlink control channel (PDCCH) candidate resources of the two search space sets are counted into the number of CCEs monitored by the terminal.

In some embodiments, the terminal monitors the PDCCH candidate resources of the two search space sets, and the number of blind detections corresponding to the PDCCH candidate resources of the two search space sets is counted into the number of blind detections performed by the terminal. The number of blind detections corresponding to the PDCCH candidate resources of the two search space sets may be 2 or 3.

It is worth noting that, in embodiments of the present invention, the first TCI state indicated by the third information may include one or more TCI states, and similarly, the first search space set corresponding to the first TCI state also includes first search space sets corresponding to the one or more TCI states, respectively, and the TCI states currently used by the terminal include not only the second TCI state and the third TCI state. In the case where the first search space set corresponding to the first TCI state indicated by the third information is only the same as a part of the search space sets corresponding to the TCI states currently used by the terminal, the first TCI state indicated by the third information is used to monitor the first search space set that is the same as the search space set corresponding to the TCI state currently used by the terminal, and other search space sets are still monitored according to the TCI states currently used by the terminal.

In the method for determining a TCI state according to embodiments of the present invention, the second information indicates the mapping relationship between the at least two search space sets and the TCI states by at least one of the following manners:
A. indicating one or more TCI states corresponding to each of the at least two search space sets;
B. indicating one or more TCI states corresponding to a control resource set associated with each of the at least two search space sets; or
C. indicating one or more TCI states corresponding to a control resource set group or control resource set pool index to which a control resource set associated with each of the at least two search space sets belongs.

In an implementation of the method for determining a TCI state according to embodiments of the present invention, the control resource set associated with each of the at least two search space sets and/or the control resource set group or the control resource set pool index to which the control resource set associated with each of the at least two search space sets belongs are configured according to other network signaling or indication information or the like, one or more TCI states corresponding to the control resource set associated with each of the at least two search space sets or one or more TCI states corresponding to the control resource set group or control resource set pool index to which the control resource set associated with each of the at least two search space sets belongs are indicated, and one or more TCI states corresponding to each of the at least two search space sets are determined according to the control resource set associated with each of the at least two search space sets.

In the method for determining a TCI state according to embodiments of the present invention, the second information includes at least one of: a radio resource control (RRC) signaling; a medium access control-control element (MAC-CE); or downlink control information (DCI).

In the method for determining a TCI state according to embodiments of the present invention, the third information includes at least one of: an MAC-CE; or DCI.

In an example embodiment, the third information includes MAC-CE, or MAC-CE+DCI.

In the method for determining a TCI state according to embodiments of the present invention, the MAC-CE is configured to indicate at least one TCI state, and the at least one TCI state corresponds to one code point in a TCI state indication field carried in the DCI; or the MAC-CE is configured to indicate at least one TCI state corresponding to each of a plurality of code points in the TCI state indication field carried in the DCI, and the TCI state indication field carried in the DCI is configured to indicate one of the plurality of code points.

In the method for determining a TCI state according to embodiments of the present invention, the at least one TCI state indicated by the third information is configured to determine a quasi co-location (QCI) assumption of at least one of a PDSCH, a PDCCH, a control resource set associated with the PDCCH, a demodulation reference signal (DMRS) of the PDSCH and/or the PDCCH, or a non-zero power (NZP) CSI-RS; and/or the at least one TCI state indicated by the third information is configured to determine a QCI assumption of at least one of a PUCCH, a PUSCH, a DMRS of the PUCCH and/or the PUSCH, or an SRS.

In the method for determining a TCI state according to embodiments of the present invention, the TCI state includes an uplink-downlink joint TCI state and/or a downlink TCI state.

Based on the same concept, the present invention also provides a method for determining a TCI state that is performed by a network device.

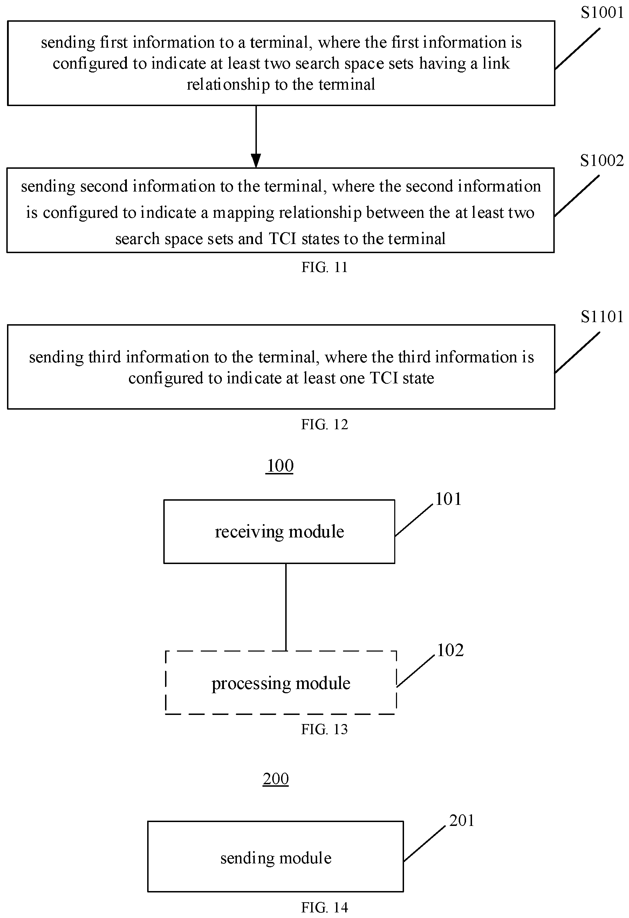

FIG. 11 is a flow chart showing a method for determining a TCI state according to an example embodiment. As shown in FIG. 11, the method for determining a TCI state is performed by a network device and includes the following steps.

In step S1001, first information is sent to a terminal, and the first information is configured to indicate, to the terminal, at least two search space sets having a link relationship.

In step S1002, second information is sent to the terminal, and the second information is configured to indicate, to the terminal, a mapping relationship between the at least two search space sets and TCI states.

In embodiments of the present invention, in a case where the terminal is configured with at least two search space sets having the link relationship, a TCI state corresponding to each of the at least two search space sets is determined, so that the same TCI state is used by the terminal and the network device, thereby improving the signal quality of the M-TRP transmission based on the TCI state.

FIG. 12 is a flow chart showing a method for determining a TCI state according to an example embodiment, as shown in FIG. 12, the method includes the following steps.

In step S1101, third information is sent to the terminal, and the third information is configured to indicate at least one TCI state.

The at least one TCI state is configured to instruct the terminal whether to monitor PDCCH candidate resources of the at least two search space sets; and/or the at least one TCI state is configured to instruct the terminal to monitor a PDCCH candidate resource of at least one first search space set in the at least two search space sets.

In embodiments of the present invention, in the case where the terminal is configured with the at least two search space sets having the link relationship, the TCI state corresponding to each of the at least two search space sets may be determined in any manner. For example, the terminal may determine the TCI state corresponding to each of the at least two search space sets in the manner as described in steps S1001-S1002; and the mapping relationship between the at least two search space sets and the TCI states indicated by the second information indicates a mapping relationship with the TCI state indicated by the third information.

It should be noted that the step S1101 may be implemented alone or in combination with any embodiment of the present invention, which will not be described in detail here.

In embodiments of the present invention, the network device sends the third information to the terminal, the third information is configured to indicate at least one TCI state, the at least one TCI state is configured to instruct the terminal whether to monitor the PDCCH candidate resources of the at least two search space sets; and/or the at least one TCI state is configured to instruct the terminal to monitor the PDCCH candidate resource of at least one first search space set in the at least two search space sets. As a result, according to the at least one TCI state indicated by the third information, the terminal determines whether to monitor the PDCCH candidate resources of the at least two search space sets; and/or determines a search space set in the at least two search space sets to monitor its PDCCH candidate resource. Therefore, it is consistent for the terminal and the network device on whether to monitor the search space set and which search space set to monitor, thereby improving the signal quality of the M-TRP transmission based on the TCI state. In embodiments of the present invention, the terminal may determine whether to monitor the PDCCH candidate resources of the at least two search space sets according to the at least one TCI state. There are many ways to determine whether to monitor the PDCCH candidate resources of the at least two search space sets according to the at least one TCI state. In embodiments of the present invention, these methods are respectively described with reference to the following several schemes. It should be noted that in embodiments of the present invention, the several schemes may be implemented separately, or each of them may be implemented in combination with other embodiments.

In the method for determining a TCI state according to embodiments of the present invention, the third information indicates one TCI state, and the one TCI state is configured to instruct the terminal to stop monitoring the PDCCH candidate resources of the at least two search space sets.

In some embodiments, the terminal stops monitoring the PDCCH candidate resources of the at least two search space sets, and control channel elements (CCEs) corresponding to the PDCCH candidate resources of the at least two search space sets are not counted into the number of CCEs monitored by the terminal, or the number of CCEs corresponding to the PDCCH candidate resources of the at least two search space sets is counted as 0.

In some embodiments, the terminal stops monitoring the PDCCH candidate resources of the at least two search space sets, and the number of blind detections corresponding to the PDCCH candidate resources of the at least two search space sets is not counted into the number of blind detections performed by the terminal, or the number of blind detections corresponding to the PDCCH candidate resources of the at least two search space sets is 0.

In embodiments of the present invention, based on the one TCI state indicated by the third information that is sent by the network device to the terminal, the terminal determines to stop monitoring the physical downlink control channel (PDCCH) candidate resources of the at least two search space sets, so that waiving reception of DCI transmitted this time may be uniformly determined by the terminal and the network device, thereby improving the signal quality of the M-TRP transmission based on the TCI state.

In the method for determining a TCI state according to embodiments of the present invention, the third information indicates a plurality of TCI states, and the plurality of TCI states are configured to instruct the terminal to monitor the PDCCH candidate resource of each of the at least two search space sets.

As an example, if the plurality of TCI states indicated by the third information include a first TCI state and a second TCI state, the terminal may determine according to the second information that a first search space set corresponds to the first TCI state, and a second search space corresponds to the second TCI state, the terminal may monitor the PDCCH candidate resource of the first search space set according to the first TCI state, and monitor the PDCCH candidate resource of the second search space set according to the second TCI state. In this way, the terminal and the network device use the same TCI state for transmission, thereby improving the signal quality of the M-TRP transmission based on the TCI state.

In some embodiments, the terminal monitors the PDCCH candidate resources of the two search space sets, and CCEs corresponding to the physical downlink control channel (PDCCH) candidate resources of the two search space sets are counted into the number of CCEs monitored by the terminal.

In some embodiments, the terminal monitors the PDCCH candidate resources of the two search space sets, and the number of blind detections corresponding to the PDCCH candidate resources of the two search space sets is counted into the number of blind detections performed by the terminal. The number of blind detections corresponding to the PDCCH candidate resources of the two search space sets may be 2 or 3.

In the method for determining a TCI state according to embodiments of the present invention, the third information indicates one TCI state, and the one TCI state is configured to instruct the terminal to monitor a PDCCH candidate resource of such a first search space set in the at least two search space sets that corresponds to the one TCI state. As an example, the terminal determines according to the second information that the first search space set corresponds to a first TCI state, and that the second search space set corresponds to a second TCI state. If the one TCI state indicated by the third information sent by the network device is the first TCI state, the terminal monitors the PDCCH candidate resource of the first search space set according to the first TCI state, and stops monitoring the PDCCH candidate resource of the second search space set.

In some embodiments, the terminal monitors the PDCCH candidate resource of the first search space set, and CCEs corresponding to the PDCCH candidate resource of the first search space set need to be counted into the number of CCEs monitored by the terminal.

In some embodiments, the terminal stops monitoring the PDCCH candidate resource of the second search space set, and CCEs corresponding to the PDCCH candidate resource of the second search space set are not counted into the number of CCEs monitored by the terminal, or the number of CCEs corresponding to the PDCCH candidate resource of the second search space set is counted as 0.

In some embodiments, the terminal monitors the PDCCH candidate resource of the first search space set, and the number of blind detections corresponding to the PDCCH candidate resource of the first search space set needs to be counted into the number of CCEs monitored by the terminal. The number of blind detections corresponding to the PDCCH candidate resource of the first search space set may be 1, 2, or 3.

In some embodiments, the terminal stops monitoring the PDCCH candidate resource of the second search space set, and the number of blind detections corresponding to the PDCCH candidate resource of the second search space set is not counted into the number of blind detections performed by the terminal, or the number of blind detections corresponding to the PDCCH candidate resource of the second search space set is 0.

In the method for determining a TCI state according to embodiments of the present invention, the third information indicates one TCI state, and the one TCI state is configured to instruct the terminal to monitor the PDCCH candidate resources of the at least two search space sets.

As an example, the terminal determines according to the second information that the first search space set corresponds to a first TCI state, and that the second search space set corresponds to a second TCI state. If the one TCI state indicated by the third information sent by the network device is the first TCI state, the terminal monitors both the PDCCH candidate resource of the first search space set and the PDCCH candidate resource of the second search space resource set according to the first TCI state.

In some embodiments, the terminal monitors the PDCCH candidate resources of the two search space sets, and CCEs corresponding to the physical downlink control channel (PDCCH) candidate resources of the two search space sets are counted into the number of CCEs monitored by the terminal.

In some embodiments, the terminal monitors the PDCCH candidate resources of the two search space sets, and the number of blind detections corresponding to the PDCCH candidate resources of the two search space sets is counted into the number of blind detections performed by the terminal. The number of blind detections corresponding to the PDCCH candidate resources of the two search space sets may be 2 or 3.

In the method for determining a TCI state according to embodiments of the present invention, the TCI state indicated by the third information includes a first TCI state, and a search space set corresponding to the first TCI state is the same as a search space set corresponding to a second TCI state among the second TCI state and a third TCI state that are currently used by the terminal; and the first TCI state is configured for determining to monitor, by the terminal, a PDCCH candidate resource of a first search space set corresponding to the first TCI state.

In embodiments of the present invention, in the case where the TCI state indicated by the third information includes the first TCI state, and the search space set corresponding to the first TCI state is the same as the search space set corresponding to the second TCI state among the second TCI state and the third TCI state that are currently used by the terminal, the terminal determines, according to the second information, a first search space set corresponding to the first TCI state and a second search space set corresponding to the third TCI state, monitors, according to the first TCI state, a PDCCH candidate resource of the first search space set corresponding to the first TCI state, and monitors a PDCCH candidate resource of the second search space set according to the third TCI state.

In some embodiments, the terminal monitors the PDCCH candidate resources of the two search space sets, and CCEs corresponding to the physical downlink control channel (PDCCH) candidate resources of the two search space sets are counted into the number of CCEs monitored by the terminal.

In some embodiments, the terminal monitors the PDCCH candidate resources of the two search space sets, and the number of blind detections corresponding to the PDCCH candidate resources of the two search space sets is counted into the number of blind detections performed by the terminal. The number of blind detections corresponding to the PDCCH candidate resources of the two search space sets may be 2 or 3.

It is worth noting that, in embodiments of the present invention, the first TCI state indicated by the third information may include one or more TCI states, and similarly, the first search space set corresponding to the first TCI state also includes first search space sets corresponding to the one or more TCI states, respectively, and the TCI states currently used by the terminal include not only the second TCI state and the third TCI state. In the case where the first search space set corresponding to the first TCI state indicated by the third information is only the same as a part of the search space sets corresponding to the TCI states currently used by the terminal, the first TCI state indicated by the third information is used to monitor the first search space set that is the same as the search space set corresponding to the TCI state currently used by the terminal, and other search space sets are still monitored according to the TCI states currently used by the terminal.

In the method for determining a TCI state according to embodiments of the present invention, the second information indicates the mapping relationship between the at least two search space sets and the transmission configuration indicator (TCI) states by at least one of the following manners:
A. indicating one or more TCI states corresponding to each of the at least two search space sets;
B. indicating one or more TCI states corresponding to a control resource set associated with each of the at least two search space sets; or
C. indicating one or more TCI states corresponding to a control resource set group or control resource set pool index to which a control resource set associated with each of the at least two search space sets belongs.

In an implementation of the method for determining a TCI state according to embodiments of the present invention, the network device may also configure the control resource set associated with each of the at least two search space sets and/or the control resource set group or the control resource set pool index to which the control resource set associated with each of the at least two search space sets belongs according to other network signaling or indication information or the like, and indicate one or more TCI states corresponding to the control resource set associated with each of the at least two search space sets or one or more TCI states corresponding to the control resource set group or control resource set pool index to which the control resource set associated with each of the at least two search space sets belongs, and the terminal determines one or more TCI states corresponding to each of the at least two search space sets according to the control resource set associated with each of the at least two search space sets.

In the method for determining a TCI state according to embodiments of the present invention, the second information includes at least one of: a radio resource control (RRC) signaling; a medium access control-control element (MAC-CE); or downlink control information (DCI).

In the method for determining a TCI state according to embodiments of the present invention, the third information includes at least one of: an MAC-CE; or DCI.

In an example embodiment, the third information includes MAC-CE, or MAC-CE+DCI.

In the method for determining a TCI state according to embodiments of the present invention, the MAC-CE is configured to indicate at least one TCI state, and the at least one TCI state corresponds to one code point in a TCI state indication field carried in the DCI; or the MAC-CE is configured to indicate at least one TCI state corresponding to each of a plurality of code points in the TCI state indication field carried in the DCI, and the TCI state indication field carried in the DCI is configured to indicate one of the plurality of code points.

In the method for determining a TCI state according to embodiments of the present invention, the at least one TCI state indicated by the third information is configured to determine a quasi co-location (QCI) assumption of at least one of a PDSCH, a PDCCH, a control resource set associated with the PDCCH, a demodulation reference signal (DMRS) of the PDSCH and/or the PDCCH, or a non-zero power (NZP) CSI-RS; and/or the at least one TCI state indicated by the third information is configured to determine a QCI assumption of at least one of a PUCCH, a PUSCH, a DMRS of the PUCCH and/or the PUSCH, or an SRS.

In the method for determining a TCI state according to embodiments of the present invention, the TCI state includes an uplink-downlink joint TCI state and/or a downlink TCI state.

It should be noted that those skilled in the art may understand that the various implementations/embodiments involved in above embodiments of the present invention may be used in conjunction with the aforementioned embodiments or may be used independently. Whether used alone or in conjunction with the aforementioned embodiments, the principles of implementation are similar. In the implementation of the present invention, some embodiments are described in terms of implementations used together. Certainly, those skilled in the art may understand that such illustrations do not limit embodiments of the present invention.

Based on the same concept, embodiments of the present invention further provide an apparatus for determining a TCI state.

It may be understood that, in order to implement the above-mentioned functions, the apparatus for determining a TCI state according to embodiments of the present invention includes corresponding hardware structures and/or software modules for performing various functions. In combination with units and algorithm steps of various examples disclosed in the embodiments of the present invention, the embodiments of the present invention may be implemented in a form of hardware or a combination of hardware and computer software. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of the embodiments of the present invention.

FIG. 13 is a block diagram showing an apparatus for determining a TCI state according to an example embodiment. Referring to FIG. 13, the apparatus includes a receiving module 101. The apparatus 100 for determining a TCI state is applied to a terminal.

The receiving module 101 is configured to: receive first information sent by a network device, and determine at least two search space sets having a link relationship according to the first information.

The receiving module 101 is further configured to: receive second information sent by the network device, and determine a mapping relationship between the at least two search space sets and transmission configuration indicator (TCI) states according to the second information.

In an embodiment, the apparatus 100 for determining a TCI state further includes a processing module 102.

The receiving module 101 is further configured to receive third information sent by the network device, and the third information is configured to indicate at least one TCI state. The processing module 102 is configured to: determine whether to monitor physical downlink control channel (PDCCH) candidate resources of the at least two search space sets according to the at least one TCI state; and/or determine to monitor a PDCCH candidate resource of at least one first search space set in the at least two search space sets according to the at least one TCI state.

In an embodiment, the third information indicates one TCI state; and the processing module 102 is configured to: in response to the third information indicating one TCI state, determine to stop monitoring the PDCCH candidate resources of the at least two search space sets.

In an embodiment, the processing module 102 is configured to: monitor the PDCCH candidate resource of the at least one first search space set in the at least two search space sets according to the mapping relationship and the at least one TCI state indicated by the third information.

In an embodiment, the third information indicates a plurality of TCI states; and the processing module 102 is configured to: monitor the PDCCH candidate resource of each of the at least two search space sets according to the mapping relationship and the plurality of TCI states.

In an embodiment, the third information indicates one TCI state; and the processing module 102 is configured to: monitor a PDCCH candidate resource of such a first search space set in the at least two search space sets that corresponds to the one TCI state according to the mapping relationship and the one TCI state.

In an embodiment, the third information indicates one TCI state; and the processing module 102 is configured to: monitor the PDCCH candidate resources of the at least two search space sets according to the one TCI state.

In an embodiment, the TCI state indicated by the third information includes a first TCI state, and a search space set corresponding to the first TCI state is the same as a search space set corresponding to a second TCI state among the second TCI state and a third TCI state that are currently used by the terminal. The processing module 102 is configured to: determine, according to the mapping relationship, a first search space set corresponding to the first TCI state and a second search space set corresponding to the third TCI state; and monitor a PDCCH candidate resource of the first search space set according to the first TCI state and monitor a PDCCH candidate resource of the second search space set according to the third TCI state.

In an embodiment, the second information indicates the mapping relationship between the at least two search space sets and the transmission configuration indicator (TCI) states by at least one of: indicating one or more TCI states corresponding to each of the at least two search space sets; indicating one or more TCI states corresponding to a control resource set associated with each of the at least two search space sets; or indicating one or more TCI states corresponding to a control resource set group or control resource set pool index to which a control resource set associated with each of the at least two search space sets belongs.

In an embodiment, the second information includes at least one of: an RRC; an MAC-CE; or DCI.

In an embodiment, the third information includes at least one of: an MAC-CE; or DCI.

In an embodiment, the MAC-CE is configured to indicate at least one TCI state, and the at least one TCI state corresponds to one code point in a TCI state indication field carried in DCI; or the MAC-CE is configured to indicate at least one TCI state corresponding to each of a plurality of code points in a TCI state indication field carried in DCI, and the TCI state indication field carried in the DCI is configured to indicate one of the plurality of code points.

In an embodiment, the at least one TCI state indicated by the third information is configured to determine a QCI assumption of at least one of a PDSCH, a PDCCH, a control resource set associated with the PDCCH, a DMRS of the PDSCH and/or the PDCCH, or a NZP CSI-RS; and/or the at least one TCI state indicated by the third information is configured to determine a QCI assumption of at least one of a PUCCH, a PUSCH, a DMRS of the PUCCH and/or the PUSCH, or an SRS.

In an embodiment, the TCI state includes an uplink-downlink joint TCI state and/or a downlink TCI state.

Regarding the apparatus in the above embodiments, the specific manners in which various modules perform operations have been described in detail in the embodiments relating to the method and will not be elaborated herein.

FIG. 14 is a block diagram showing an apparatus for determining a TCI state according to an example embodiment. Referring to FIG. 14, the apparatus includes a sending module 201. The apparatus 200 for determining a TCI state is applied to a network device.

The sending module 201 is configured to send first information to a terminal, and the first information is configured for the terminal to determine at least two search space sets having a link relationship. The sending module 201 is further configured to: send second information to the terminal, and the second information is configured for the terminal to determine a mapping relationship between the at least two search space sets and TCI state s.

In an embodiment, the sending module 201 is configured to send third information to the terminal, the third information is configured to indicate at least one TCI state; the at least one TCI state is configured to instruct the terminal whether to monitor PDCCH candidate resources of the at least two search space sets; and/or the at least one TCI state is configured to instruct the terminal to monitor a PDCCH candidate resource of at least one first search space set in the at least two search space sets.

In an embodiment, the third information indicates one TCI state, and the one TCI state is configured to instruct the terminal to stop monitoring the PDCCH candidate resources of the at least two search space sets.

In an embodiment, the third information indicates a plurality of TCI states, and the plurality of TCI states are configured to instruct the terminal to monitor the PDCCH candidate resource of each of the at least two search space sets.

In an embodiment, the third information indicates one TCI state, and the one TCI state is configured to instruct the terminal to monitor a PDCCH candidate resource of such a first search space set in the at least two search space sets that corresponds to the one TCI state.

In an embodiment, the third information indicates one TCI state, and the one TCI state is configured to instruct the terminal to monitor the PDCCH candidate resources of the at least two search space sets.

In an embodiment, the TCI state indicated by the third information includes a first TCI state, and a search space set corresponding to the first TCI state is the same as a search space set corresponding to a second TCI state among the second TCI state and a third TCI state that are currently used by the terminal; and the first TCI state is configured for determining to monitor, by the terminal, a PDCCH candidate resource of a first search space set corresponding to the first TCI state.

In an embodiment, the second information indicates the mapping relationship between the at least two search space sets and the transmission configuration indicator (TCI) states by at least one of: indicating one or more TCI states corresponding to each of the at least two search space sets; indicating one or more TCI states corresponding to a control resource set associated with each of the at least two search space sets; or indicating one or more TCI states corresponding to a control resource set group or control resource set pool index to which a control resource set associated with each of the at least two search space sets belongs.

In an embodiment, the second information includes at least one of: a radio resource control (RRC) signaling; a medium access control-control element (MAC-CE); or downlink control information (DCI).

In an embodiment, the third information includes at least one of: an MAC-CE; or DCI.

In an embodiment, the MAC-CE is configured to indicate at least one TCI state, and the at least one TCI state corresponds to one code point in a TCI state indication field carried in DCI; or the MAC-CE is configured to indicate at least one TCI state corresponding to each of a plurality of code points in a TCI state indication field carried in DCI, and the TCI state indication field carried in the DCI is configured to indicate one of the plurality of code points.

In an embodiment, the at least one TCI state indicated by the third information is configured to determine a QCI assumption of at least one of a PDSCH, a PDCCH, a control resource set associated with the PDCCH, a DMRS of the PDSCH and/or the PDCCH, or a NZP CSI-RS; and/or the at least one TCI state indicated by the third information is configured to determine a QCI assumption of at least one of a PUCCH, a PUSCH, a DMRS of the PUCCH and/or the PUSCH, or an SRS.

In an embodiment, the TCI state includes an uplink-downlink joint TCI state and/or a downlink TCI state.

It should be noted that the various modules/units involved in the apparatus 100 for determining a TCI state and the apparatus 200 for determining a TCI state according to the embodiments of the present invention are described as examples for explanation, and the present invention are not limited thereto. For example, the apparatus 100 for determining a TCI state in the embodiments of the present invention may further include a sending unit. The apparatus 200 for determining a TCI state may further include a receiving unit and/or a processing unit. Here, the units included in the apparatus 100 for determining a TCI state and the apparatus 200 for determining a TCI state may interact with each other or may interact with other network element devices.

Regarding the apparatus in the above embodiments, the specific manners in which various modules perform operations have been described in detail in the embodiments relating to the method and will not be elaborated herein.

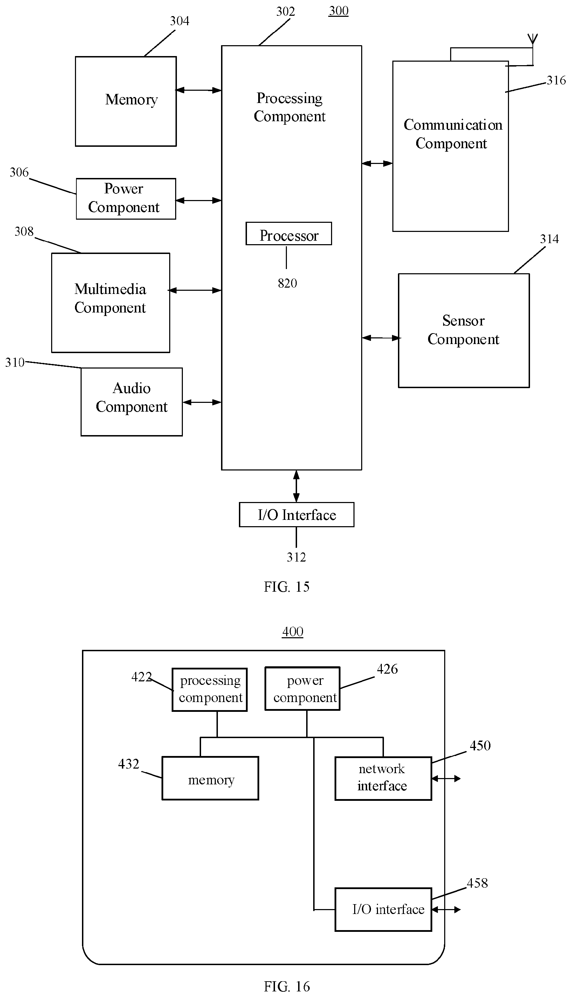

FIG. 15 is a block diagram showing an apparatus for determining a TCI state according to an example embodiment. For example, the apparatus 300 may be a mobile phone, a computer, a digital broadcast terminal, a messaging device, a game console, a tablet device, a medical device, a fitness device, a personal digital assistant, or the like.

Referring to FIG. 15, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, phone calls, data communications, camera operations, and recording operations. The processing component 302 may include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the apparatus 300. Examples of such data include instructions for any applications or methods operated on the apparatus 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the apparatus 300. The power component 306 may include a power management system, one or more power sources, and any other components associated with the generation, management, and distribution of power in the apparatus 300.

The multimedia component 308 includes a screen providing an output interface between the apparatus 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the apparatus 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the apparatus 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the apparatus 300. For instance, the sensor component 314 may detect an open/closed status of the apparatus 300, relative positioning of components, e.g., the display and the keypad, of the apparatus 300, a change in position of the apparatus 300 or a component of the apparatus 300, a presence or absence of user contact with the apparatus 300, an orientation or an acceleration/deceleration of the apparatus 300, and a change in temperature of the apparatus 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the apparatus 300 and other devices. The apparatus 300 can access a wireless network based on a communication standard, such as Wi-Fi, 2G, or 3G, or a combination thereof. In an example embodiment, the communication component 316 receives a broadcast signal or broadcast associated information from an external broadcast management system via a broadcast channel. In an example embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an example embodiment, the apparatus 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

In an example embodiment, there is also provided a non-transitory computer readable storage medium including instructions, such as included in the memory 304, executable by the processor 320 in the apparatus 300, for completing the above-mentioned method. For example, the non-transitory computer-readable storage medium may be a ROM, a random access memory (RAM), a CD-ROM, a magnetic tape, a floppy disc, an optical data storage device, and the like.

FIG. 16 is a block diagram showing an apparatus for determining a TCI state according to an example embodiment. For example, the apparatus 400 is provided as a network device. Referring to FIG. 16, the apparatus 400 includes: a processing component 422 which further includes one or more processors, and a memory resource represented by a memory 432. The memory 432 is configured to store instructions executable by the processing component 422, such as an application program. The application program stored in the memory 432 may include one or more modules each corresponding to a set of instructions. In addition, the processing component 422 is configured to execute instructions so as to implement the above method.

The apparatus 400 may also include a power component 426 configured to perform power management of the apparatus 400, a wired or wireless network interface 450 configured to connect the apparatus 400 to a network, and an input/output (I/O) interface 458. The apparatus 400 may operate an operating system stored in the memory 432, such as Windows ServerTM, Mac OS XTM, UnixTM, LinuxTM, FreeBSDTM or similar operating systems.

In an embodiment, there is also provided a non-transitory computer-readable storage medium including instructions, such as a memory 432 including instructions, which may be executed by a processing component 422 of the apparatus 400 to perform the above methods. For example, the non-transitory computer readable storage medium may be a ROM, a random access memory (RAM), a CD-ROM (compact disc read-only memory), a magnetic tape, a floppy disk, an optical data storage device, etc.

It is further understood that "a plurality" in the present invention refers to two or more, and other quantifiers are similar thereto. The term "and/or" describes an associated relationship of associated objects, and means that there may be three relationships, for example, "A and/or B" may mean that A exists alone, A and B exist at the same time, and B exists alone. A character "/" generally indicates that contextual objects are in an "or" relationship. The term "a/an" and "the" in singular forms are intended to include plural forms, unless clearly indicated in the context otherwise.

It is further understood that the meaning of expressions such as "in response to" and "if" involved in the present invention depends on the context and the actual scenario of use, and as used herein, the term "in response to" may be understood to mean "when", "upon" or "if" depending on the context.

It is further understood that terms such as "first", and "second" are used to describe various information, these information should not be limited by these terms. These terms are used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present invention.

It is further understood that although operations are described in a specific order in the accompanying drawings in the embodiments of the present invention, it should not be understood that these operations are required to be performed in the specific order as shown or in a serial order, or that all of the operations shown are required to be performed to obtain desired results. In certain circumstances, multitasking and parallel processing may be advantageous.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A method for determining a transmission configuration indicator state, performed by a terminal, comprising:
receiving first information sent by a network device, and determining at least two search space sets having a link relationship according to the first information; and
receiving second information sent by the network device, and determining a mapping relationship between the at least two search space sets and transmission configuration indicator (TCI) states according to the second information.

2. The method according to claim 1, further comprising:
receiving third information sent by the network device, wherein the third information is configured to indicate at least one TCI state;
determining whether to monitor physical downlink control channel (PDCCH) candidate resources of the at least two search space sets according to the at least one TCI state; and/or
determining to monitor a PDCCH candidate resource of at least one first search space set in the at least two search space sets according to the at least one TCI state.

3. The method according to claim 2, wherein the third information indicates one TCI state;
determining whether to monitor the physical downlink control channel (PDCCH) candidate resource s of the at least two search space sets according to the at least one TCI state comprises:
in response to the third information indicating one TCI state, determining to stop monitoring the PDCCH candidate resources of the at least two search space sets.

4. The method according to claim 2, wherein determining to monitor the PDCCH candidate resource of the at least one first search space set in the at least two search space sets according to the at least one TCI state comprises:
monitoring the PDCCH candidate resource of the at least one first search space set in the at least two search space sets according to the mapping relationship and the at least one TCI state indicated by the third information.

5. The method according to claim 4, wherein the third information indicates a plurality of TCI states;
monitoring the PDCCH candidate resource of the at least one first search space set in the at least two search space sets according to the mapping relationship and the at least one TCI state indicated by the third information comprises:
monitoring the PDCCH candidate resource of each of the at least two search space sets according to the mapping relationship and the plurality of TCI states.

6. The method according to claim 4, wherein the third information indicates one TCI state;
monitoring the PDCCH candidate resource of the at least one first search space set in the at least two search space sets according to the mapping relationship and the at least one TCI state indicated by the third information comprises:
monitoring a PDCCH candidate resource of such a first search space set in the at least two search space sets that corresponds to the one TCI state according to the mapping relationship and the one TCI state.

7. The method according to claim 4, wherein the third information indicates one TCI state;
monitoring the PDCCH candidate resource of the at least one first search space set in the at least two search space sets according to the mapping relationship and the at least one TCI state indicated by the third information comprises:
monitoring the PDCCH candidate resources of the at least two search space sets according to the one TCI state.

8. The method according to claim 4, wherein the TCI state indicated by the third information comprises a first TCI state, and a search space set corresponding to the first TCI state is the same as a search space set corresponding to a second TCI state among the second TCI state and a third TCI state that are currently used by the terminal;
monitoring the PDCCH candidate resource of the at least one first search space set in the at least two search space sets according to the mapping relationship and the at least one TCI state indicated by the third information comprises:
determining a first search space set corresponding to the first TCI state and a second search space set corresponding to the third TCI state according to the mapping relationship; and
monitoring a PDCCH candidate resource of the first search space set according to the first TCI state and monitoring a PDCCH candidate resource of the second search space set according to the third TCI state.

9. The method according to any one of claims 1 to 8, wherein the second information indicates the mapping relationship between the at least two search space sets and the transmission configuration indicator (TCI) states by at least one of:
indicating one or more TCI states corresponding to each of the at least two search space sets;
indicating one or more TCI states corresponding to a control resource set associated with each of the at least two search space sets; or
indicating one or more TCI states corresponding to a control resource set group or control resource set pool index to which a control resource set associated with each of the at least two search space sets belongs.

10. The method according to any one of claims 1 to 9, wherein the second information comprises at least one of:
a radio resource control (RRC) signaling;
a medium access control-control element (MAC-CE); or
downlink control information (DCI).

11. The method according to any one of claims 2 to 10, wherein the third information comprises at least one of:
an MAC-CE; or
DCI.

12. The method according to claim 11, wherein the MAC-CE is configured to indicate at least one TCI state, wherein the at least one TCI state corresponds to one code point in a TCI state indication field carried in DCI; or
the MAC-CE is configured to indicate at least one TCI state corresponding to each of a plurality of code points in a TCI state indication field carried in DCI, and the TCI state indication field carried in the DCI is configured to indicate one of the plurality of code points.

13. The method according to any one of claims 2 to 12, wherein the at least one TCI state indicated by the third information is configured to determine a quasi co-location (QCI) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or
the at least one TCI state indicated by the third information is configured to determine a QCI assumption of at least one of a physical uplink control channel (PUCCH), a physical uplink shared channel (PUSCH), a DMRS of the PUCCH and/or the PUSCH, or a sounding reference signal (SRS).

14. The method according to any one of claims 1 to 13, wherein the TCI state comprises an uplink-downlink joint TCI state and/or a downlink TCI state.

15. A method for determining a transmission configuration indicator state, performed by a network device, comprising:
sending first information to a terminal, wherein the first information is configured to instruct the terminal to determine at least two search space sets having a link relationship; and
sending second information to the terminal, wherein the second information is configured to instruct the terminal to determine a mapping relationship between the at least two search space sets and transmission configuration indicator (TCI) states.

16. The method according to claim 15, further comprising:
sending third information to the terminal, wherein the third information is configured to indicate at least one TCI state;
wherein the at least one TCI state is configured to instruct the terminal whether to monitor physical downlink control channel (PDCCH) candidate resources of the at least two search space sets; and/or
the at least one TCI state is configured to instruct the terminal to monitor a physical downlink control channel (PDCCH) candidate resource of at least one first search space set in the at least two search space sets.

17. The method according to claim 16, wherein the third information indicates one TCI state, and the one TCI state is configured to instruct the terminal to stop monitoring the PDCCH candidate resources of the at least two search space sets.

18. The method according to claim 16, wherein the third information indicates a plurality of TCI states, and the plurality of TCI states are configured to instruct the terminal to monitor the PDCCH candidate resource of each of the at least two search space sets.

19. The method according to claim 16, wherein the third information indicates one TCI state, and the one TCI state is configured to instruct the terminal to monitor a PDCCH candidate resource of such a first search space set in the at least two search space sets that corresponds to the one TCI state.

20. The method according to claim 16, wherein the third information indicates one TCI state, and the one TCI state is configured to instruct the terminal to monitor the PDCCH candidate resources of the at least two search space sets.

21. The method according to claim 16, wherein the TCI state indicated by the third information comprises a first TCI state, and a search space set corresponding to the first TCI state is the same as a search space set corresponding to a second TCI state among the second TCI state and a third TCI state that are currently used by the terminal; and the first TCI state is configured for determining to monitor, by the terminal, a PDCCH candidate resource of a first search space set corresponding to the first TCI state.

22. The method according to any one of claims 15 to 21, wherein the second information indicates the mapping relationship between the at least two search space sets and the transmission configuration indicator (TCI) states by at least one of:
indicating one or more TCI states corresponding to each of the at least two search space sets;
indicating one or more TCI states corresponding to a control resource set associated with each of the at least two search space sets; or
indicating one or more TCI states corresponding to a control resource set group or control resource set pool index to which a control resource set associated with each of the at least two search space sets belongs.

23. The method according to any one of claims 15 to 22, wherein the second information comprises at least one of:
a radio resource control (RRC) signaling;
a medium access control-control element (MAC-CE); or
downlink control information (DCI).

24. The method according to any one of claims 16 to 23, wherein the third information comprises at least one of:
an MAC-CE; or
DCI.

25. The method according to claim 24, wherein the MAC-CE is configured to indicate at least one TCI state, wherein the at least one TCI state corresponds to one code point in a TCI state indication field carried in DCI; or
the MAC-CE is configured to indicate at least one TCI state corresponding to each of a plurality of code points in a TCI state indication field carried in DCI, and the TCI state indication field carried in the DCI is configured to indicate one of the plurality of code points.

26. The method according to any one of claims 16 to 25, wherein the at least one TCI state indicated by the third information is configured to determine a quasi co-location (QCI) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or
the at least one TCI state indicated by the third information is configured to determine a QCI assumption of at least one of a physical uplink control channel (PUCCH), a physical uplink shared channel (PUSCH), a DMRS of the PUCCH and/or the PUSCH, or a sounding reference signal (SRS).

27. The method according to any one of claims 15 to 26, wherein the TCI state comprises an uplink-downlink joint TCI state and/or a downlink TCI state.

28. An apparatus for determining a transmission configuration indicator state, applied to a terminal, comprising:
a receiving module, configured to: receive first information sent by a network device, and determine at least two search space sets having a link relationship according to the first information;
wherein the receiving module is further configured to: receive second information sent by the network device, and determine a mapping relationship between the at least two search space sets and transmission configuration indicator (TCI) states according to the second information.

29. An apparatus for determining a transmission configuration indicator state, applied to a network device, comprising:
a sending module, configured to: send first information to a terminal, wherein the first information is configured for the terminal to determine at least two search space sets having a link relationship;
wherein the sending module is further configured to: send second information to the terminal, wherein the second information is configured for the terminal to determine a mapping relationship between the at least two search space sets and transmission configuration indicator (TCI) states.

30. An apparatus for determining a transmission configuration indicator state, comprising:
a processor; and
a memory for storing instructions executable by the processor;
wherein the processor is configured to: perform the method according to any one of claims 1 to 14.

31. An apparatus for determining a transmission configuration indicator state, comprising:
a processor; and
a memory for storing instructions executable by the processor;
wherein the processor is configured to: perform the method according to any one of claims 15 to 27.

32. A storage medium having stored therein instructions that, when executed by a processor of a terminal, causes the terminal to perform the method according to any one of claims 1 to 14.

33. A storage medium having stored therein instructions that, when executed by a processor of a network device, causes the network device to perform the method according to any one of claims 15 to 27.

34. A communication system, comprising a terminal and a network device,
wherein the terminal is configured to perform the method according to any one of claims 1 to 14;
the network device is configured to perform the method according to any one of claims 15 to 27.
